# EUROPÄISCHE PATENTSCHRIFT

(11) **EP 1 567 394 B1**
(45) Veröffentlichungstag und Bekanntmachung des Hinweises auf die Patenterteilung: **13.12.2006**
(21) Anmeldenummer: 03785527.7
(22) Anmeldetag: 19.11.2003
(51) Int. Cl.: B60R 21/16

(54) **GASSACK FÜR EINE INSASSENSCHUTZEINRICHTUNG**
GAS BAG FOR A CAR PASSENGER-PROTECTING SYSTEM
SAC A GAZ POUR UN SYSTEME DE PROTECTION D'OCCUPANT DE VOITURE

(30) Priorität: 03.12.2002 DE 10257168
(43) Veröffentlichungstag der Anmeldung: 31.08.2005
(73) Patentinhaber: TAKATA CORPORATION, Minato-ku, Tokyo 106-8510 (JP)
(72) Erfinder: SENDELBACH, Hans-Peter, 89250 Senden (DE); SIEVERS, Thomas, 89081 Ulm (DE); DAVID, Patrick-A., 89134 Blaustein (DE); BREUNINGER, Martin, 89233 Neu-Ulm/Pfuhl (DE)
(74) Vertreter: Baumgärtel, Gunnar
(86) Internationale Anmeldenummer: PCT/DE2003/003863
(87) Internationale Veröffentlichungsnummer: WO 2004/050434

(56) Entgegenhaltungen:
- EP-A- 0 940 301
- EP-A- 1 249 374
- US-A- 5 829 779
- US-A- 6 155 598
- US-A1- 2001 015 549
- US-B1- 6 371 518

## Beschreibung

Die Erfindung bezieht sich auf einen Gassack für eine Insassenschutzeinrichtung mit den Merkmalen gemäß dem Oberbegriff des Anspruchs 1.

Ein derartiger Gassack ist aus der britischen Offenlegungsschrift 2 318 767 bekannt. Bei diesem vorbekannten Gassack ist ein oberer Teil der Gassackhülle in einen unteren Teil der Gassackhülle hineingestülpt. Durch das Ineinanderstülpen der Gassackteile wird bei dem vorbekannten Gassack erreicht, dass sich der Gassack in einer vorgegebenen Weise bzw. in einer vorgegebenen Reihenfolge bezüglich der einzelnen Gassackhüllenabschnitte entfaltet. Konkret wird beim Aufblasen des vorbekannten Gassacks zunächst der untere Teil der Gassackhülle aufgeblasen. Erst wenn sich der untere Teil der Gassackhülle entfaltet hat, wird der obere, hineingestülpte Teil der Gassackhülle aus dem unteren Teil der Gassackhülle aufgrund des Gasdrucks herausgedrückt, wodurch ein zeitlich verzögertes Aufblasen des oberen Teils der Gassackhülle erreicht wird.

Der Erfindung liegt die Aufgabe zugrunde, einen Gassack für eine Insassenschutzeinrichtung anzugeben, bei dem eine gezielte Positionierung des Gassacks bzw. eines Teiles davon vor dem Aufblasen erzielt wird.

Diese Aufgabe wird ausgehend von einem Gassack der eingangs angegebenen Art erfindungsgemäß durch die kennzeichnenden Merkmale des Anspruchs 1 gelöst. Vorteilhafte Ausgestaltungen des erfindungsgemäßen Gassacks sind in Unteransprüchen angegeben. Unter einem schmalen Füllkanal wird erfindungsgemäß ein Füllkanal verstanden, der in Ausstülprichtung länger ist als er im Querschnitt breit ist.

Ein wesentlicher Vorteil des erfindungsgemäßen Gassacks ist darin zu sehen, dass er eine Vorzugsrichtung beim Aufblasen aufweist. Konkret wird der in den Füllkanal hineingestülpte Teil der Gassackhülle beim Aufblasen quasi aus dem Füllkanal herausgeschossen. Dies wird erfindungsgemäß durch den schmalen Füllkanal erreicht, der eine Vorzugsrichtung bzw. eine Ausschussrichtung vorgibt. Bei einem Auslösen des Gasgenerators wird nämlich ein relativ großer Druck im Füllkanal in relativ kurzer Zeit aufgebaut. Das hineingestülpte Hüllenmaterial wird aufgrund dieses großen Druckes aus dem Füllkanal herausgestoßen und entfaltet sich aufgrund des gerichteten Ausstoßimpulses in der vorgegebenen Ausstülprichtung, die der Längsrichtung des schmalen Füllkanals entspricht. Mit anderen Worten wird durch das Vorsehen des schmalen Füllkanals eine gezielte Positionierung des Gassacks bzw. eines Teiles davon erreicht, indem der Gassack bzw. ein Teil des Gassacks aus dem Füllkanal gezielt in vorgegebener Richtung herausgeschossen wird.

Um zu erreichen, dass der von dem Gasgenerator erzeugte Gasdruck vorzugsweise zum Herausstoßen des hineingestülpten Teiles der Gassackhülle verwendet wird, wird es als vorteilhaft angesehen, wenn der Füllkanal unmittelbar an den Gasgenerator anschließbar bzw. angeschlossen ist.

Gemäß einer vorteilhaften Ausgestaltung des erfindungsgemäßen Gassacks ist vorgesehen, dass der Gassack an einem Ende des Füllkanals angeschlossen ist und der hineingestülpte Teil der Gassackhülle unmittelbar vor der Anschlussstelle des Gasgenerators liegt. Bei dieser vorteilhaften Ausgestaltung des erfindungsgemäßen Gassacks liegt der hineingestülpte Teil der Gassackhülle also unmittelbar vor einer Gasaustrittsöffnung des Gasgenerators, wodurch ein besonders großer Ausstoßimpuls auf die hineingestülpte Gassackhülle ausgeübt wird, was zu einem besonders schnellen Entfalten der Gassackhülle in der vorgegebenen Ausstülprichtung führt.

Gemäß einer anderen vorteilhaften Ausgestaltung des erfindungsgemäßen Gassacks ist vorgesehen, dass der Füllkanal eine Seitentasche bildet, die sich seitlich neben der Anschlussstelle des Gasgenerators erstreckt. Die Anschlussstelle des Gasgenerators liegt damit im vorderen Teil des Füllkanals.

Besonders einfach lässt sich ein Teil der Gassackhülle in den Füllkanal einführen, in dem die Gassackhülle ungefaltet in den Füllkanal hineingestopft wird.

Um ein Entfalten der Gassackhülle in einer vordefinierten Weise zu erreichen, wird es als vorteilhaft angesehen, wenn der hineingestülpte Teil der Gassackhülle zumindest teilweise zick-zack-gefaltet, gefächert und/oder zusammengerollt ist.

Ein Entfalten der Gassackhülle entlang der vorgegebenen Ausstülprichtung lässt sich dabei in vorteilhafter Weise dann erreichen, wenn der hineingestülpte Bereich der Gassackhülle an seinem dem Füllkanal abgewandten Hüllenende zick-zack-gefaltet, gefächert und/oder zusammengerollt ist, das zick-zack-gefaltete, gefächerte und/oder zusammengerollte Hüllenpaket zumindest einmal unter Bildung eines im Querschnitt U-förmigen Hüllenpakets zusammengeklappt ist und das U-förmige Hüllenpaket in den Füllkanal eingeschoben ist.

Im Übrigen wird es als vorteilhaft angesehen, wenn der Gassack zwei oder mehr Gassackkammern aufweist. Zumindest eine der Gassackkammern kann dabei eine innere Gassackkammer sein, die von einer äußeren Gassackkammer des Gassacks umgeben wird.

Der Füllkanal kann bei dem erfindungsgemäßen Gassack in unterschiedlicher Weise gebildet sein. Als vorteilhaft wird es angesehen, wenn der Füllkanal zumindest teilweise seitlich durch eine Naht in der Gassackhülle gebildet ist.

Stattdessen kann der Füllkanal zumindest teilweise durch Seitenwände einer inneren Gassackkammer gebildet sein, wenn der Gassack mehrere Gassackkammern aufweist.

Der Füllkanal kann darüber hinaus vorteilhaft durch eine im Gassack angebrachte Diffusorlage und/oder durch Fangbänder gebildet sein.

Um sicherzustellen, dass der in den Füllkanal hineingestülpte Teil der Gassackhülle sich entlang der vorgegebenen Ausstülprichtung entfaltet, wird es als vorteilhaft angesehen, wenn der Füllkanal zumindest teilweise rohrförmig ausgebildet ist. Zumindest an seinem offenen Kanalende kann sich der Querschnitt des Füllkanals dann trichterförmig vergrößern, um das Hineinstülpen bzw. das Hineinschieben des Hüllenpakets beim Zusammenfalten des Gassacks zu vereinfachen.

Darüber hinaus wird es als vorteilhaft angesehen, wenn der erfindungsgemäße Gassack ein sogenannter Pelvis-Thorax-Airbag bzw.- -Gassack ist. Vorteilhaft ist ein solcher Pelvis-Thorax-Gassack in einer Rückenlehne eines Kraftfahrzeugsitzes angebracht, wobei sich die vorgegebene Ausstülprichtung des Füllkanals parallel zur Rückenlehne des Kraftfahrzeugsitzes in Richtung Fahrzeugsitzfläche erstreckt.

Im Übrigen wird es als vorteilhaft angesehen, wenn der erfindungsgemäße Gassack ein sogenannter Head-Thorax-Gassack ist. Um dabei dann zu erreichen, dass sich der Kopfbereich des Head-Thorax-Gassacks besonders schnell in die vorgegebene Position bewegt, wird es als vorteilhaft angesehen, wenn der Gassack in einer Rückenlehne eines Kraftfahrzeugsitzes derart angebracht ist, dass sich die vorgegebene Ausstülprichtung des Füllkanals parallel zur Rückenlehne in Richtung Fahrzeugdach erstreckt.

Vorteilhaft kann der Gassack auch ein Head-Thorax-Pelvis-Gassack sein. Dabei kann der Head-Bereich und/oder der Pelvis-Bereich des Gassacks in jeweils einen Füllkanal eingestülpt sein. Es kann also zwei Füllkanäle geben.

Bei einem Head-Thorax-Pelvis-Gassack wird es außerdem als vorteilhaft angesehen, wenn der Gassack in einer Rückenlehne eines Kraftfahrzeugsitzes derart angebracht ist, dass die vorgegebene Ausstülprichtung des Füllkanals für den Head-Bereich sich parallel zur Rückenlehne des Kraftfahrzeugsitzes in Richtung Fahrzeugdach und/oder die vorgegebene Ausstülprichtung des Füllkanals für den Pelvis-Bereich sich parallel zur Rückenlehne des Kraftfahrzeugsitzes in Richtung Fahrzeugsitzfläche erstreckt. Vorteilhaft weist sowohl der Pelvis-Bereich als auch der Head-Bereich jeweils einen entsprechend ausgerichteten Füllkanal bzw. Schusskanal auf.

Die Erfindung bezieht sich darüber hinaus auf ein Verfahren zum Falten eines Gassacks.

Um bei einem solchen Verfahren zu erreichen, dass eine gezielte Positionierung des Gassacks bzw. von Teilen des Gassacks vor dem Aufblasen erzielt wird, ist erfindungsgemäß vorgesehen, dass der Gassack derart gefaltet wird, dass ein Teil der Gassackhülle in einen schmalen, durch einen Teil der Gassack-Hülle gebildeten Füllkanal eingeführt wird, der sich entlang einer vorgegebenen Ausstülprichtung erstreckt.

Der eingestülpte bzw. eingeführte Teil der Gassackhülle kann dabei ungefaltet in den Füllkanal gestopft sein.

Um ein definiertes Entfalten des Gassackes sicherzustellen, wird es jedoch als vorteilhaft angesehen, wenn der hineingestülpte Teil der Gassackhülle zumindest teilweise zick-zack-gefaltet, gefächert und/oder zusammengerollt wird.

Ein besonders schnelles Entfalten der Gassackhülle wird in vorteilhafter Weise dann erreicht, wenn der hineinzustülpende Bereich an seinem dem Füllkanal abgewandten Hüllenende zunächst zick-zack-gefaltet, gefächert und/oder zusammengerollt wird, das zick-zack-gefaltete, gefächerte und/oder zusammengerollte Hüllenpaket anschließend zunächst einmal unter Bildung eines im Querschnitt U-förmigen Hüllenpakets zusammengeklappt wird und das U-förmige Hüllenpaket dann in den Füllkanal eingeschoben wird.

Zur Erläuterung der Erfindung zeigen die
- Figuren 1a bis 1d und 2a bis 2d: ein erstes Ausführungsbeispiel für einen erfindungsgemäßen Gassack,
- Figuren 3a bis 3d und 4a bis 4d: ein zweites Ausführungsbeispiel für einen erfindungsgemäßen Gassack,
- Figuren 5a und 5b: ein drittes Ausführungsbeispiel für einen erfindungsgemäßen Gassack,
- Figuren 6a und 6b: ein viertes Ausführungsbeispiel für einen erfindungsgemäßen Gassack,
- Figuren 7a und 7b: ein fünftes Ausführungsbeispiel für einen erfindungsgemäßen Gassack,
- Figuren 8a und 8b: ein sechstes Ausführungsbeispiel für einen erfindungsgemäßen Gassack,
- Figuren 9a und 9b: ein siebentes Ausführungsbeispiel für einen erfindungsgemäßen Gassack und
- Figuren 10a und 10b: ein achtes Ausführungsbeispiel für einen erfindungsgemäßen Gassack.
- Figuren 11a bis 11d: ein neuntes Ausführungsbeispiel für einen erfindungsgemäßen Gassack.

In den Figuren werden für identische bzw. vergleichbare Komponenten dieselben Bezugszeichen verwendet.

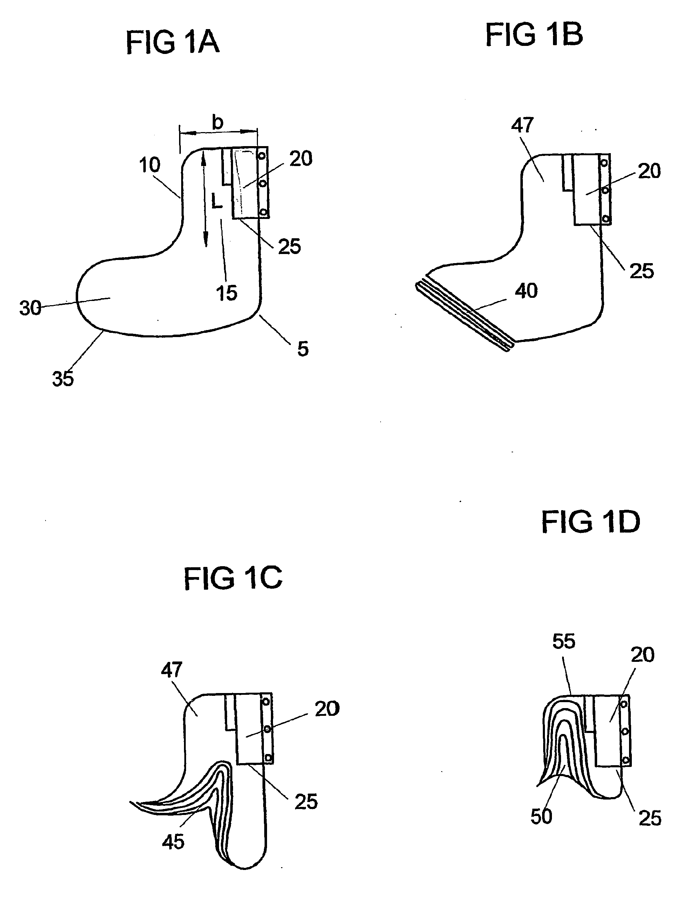

Die Figuren 1a bis 1d zeigen ein erstes Ausführungsbeispiel für einen erfindungsgemäßen Gassack 5. Man erkennt einen Hüllenabschnitt 10, der einen Füllkanal 15 bildet. Die Länge L des Füllkanals ist dabei größer als die Breite b bzw. der Durchmesser b des Füllkanals 15. An den Füllkanal 15 ist ein Gasgenerator 20 angeschlossen, der an einer Gasaustrittsöffnung 25 bzw. einer Anstoßstelle des Gasgenerators Gas in den Gassack 5 einspeisen kann.

In den Figuren 1b bis 1d ist im Detail gezeigt, wie die Gassackhülle 30 des Gassacks 5 zusammengefaltet wird. Zunächst wird das dem Füllkanal 15 abgewandte Hüllenende 35 beispielsweise zick-zack-gefaltet, gerollt oder gefächert. Im Nachfolgenden wird beispielhaft von einer Zick-zack-Faltung ausgegangen. Dabei entsteht ein zick-zack-gefaltetes Hüllenpaket 40, wie sich in der Figur 1b gut erkennen lässt. Das zick-zack-gefaltete Hüllenpaktet 40 wird anschließend in der Mitte zusammengeklappt bzw. zusammengelegt, wodurch ein U-förmiges Hüllenpaket 45 entsteht. Das U-förmige Hüllenpaket 45 ist in der Figur 1c gut zu erkennen.

Das U-förmige Hüllenpaket 45 wird anschließend in den Hüllenabschnitt 10 und damit in den Füllkanal 15 eingeführt bzw. eingeschoben oder eingestopft.

Wie sich in den Figuren 1a bis 1d erkennen lässt, liegt der Füllkanal 15 seitlich neben dem Gasgenerator und bildet eine Art Seitentasche 47. Die Gasaustrittsöffnung 25 des Gasgenerators 20 liegt dabei im vorderen Bereich 50 des Füllkanals 15, also an dem dem verschlossenen Ende 55 des Füllkanals 15 abgewandten Ende.

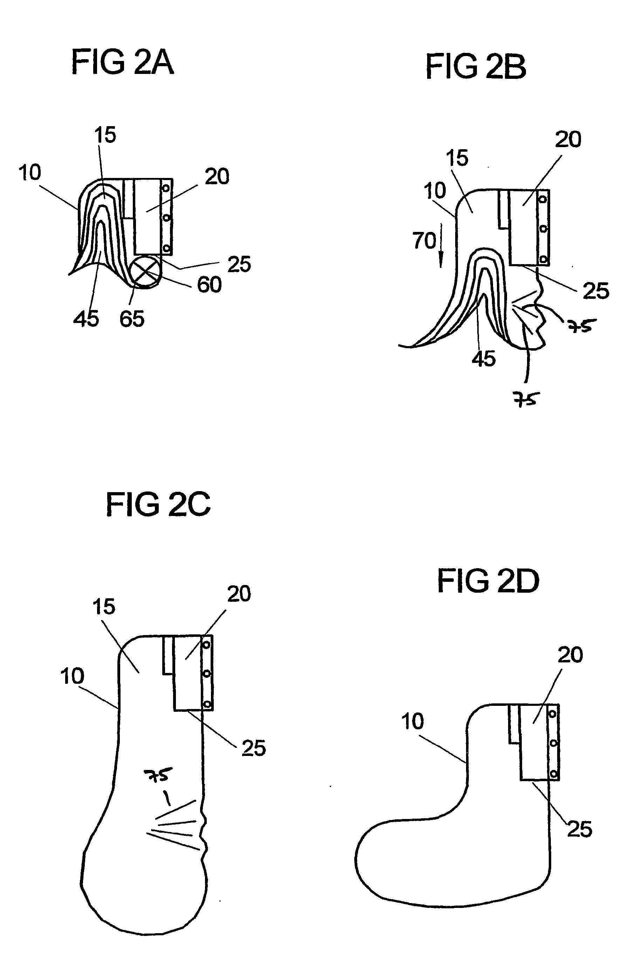

In den Figuren 2a bis 2d ist gezeigt, wie sich der Gassack gemäß den Figuren 1a bis 1d entfaltet. Im Bereich 60 bildet sich nach einer Aktivierung des Gasgenerators 20 ein großer Überdruck, der zu einem Herausschießen des U-förmigen Hüllenpakets 45 führt. Konkret wird das U-förmige Hüllenpaket 45 im Bereich 65 der Gassackhülle aus dem Füllkanal 15 herausgezogen.

Aufgrund des Füllkanals 15 bzw. der Ausrichtung des Füllkanals 15 wird dabei eine vorgegebene Ausstülprichtung 70 vorgegeben. Man erkennt in den Figuren 2b bis 2c Falten 75 infolge einer Materialanhäufung. Diese Falten 75 werden erst entfaltet, wenn das Hüllenpaket 45 aus dem Füllkanal 15 dynamisch herausgeschossen ist und sich die Dynamik der Massenanteile ausgeglichen hat, so dass der Gassack 10 seine Endform aufgrund des Materialzuschnitts erreicht.

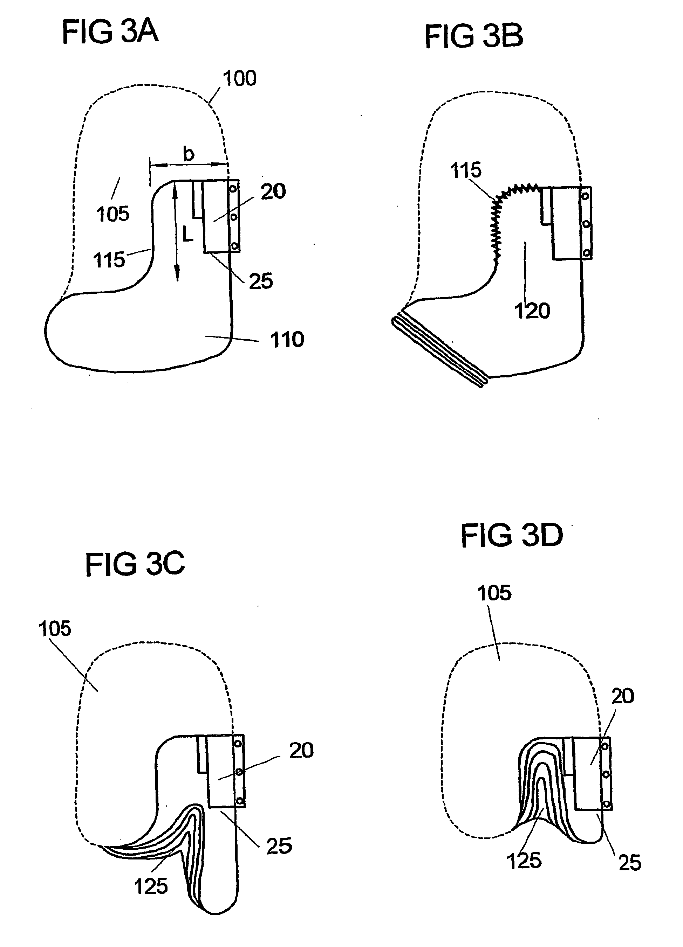

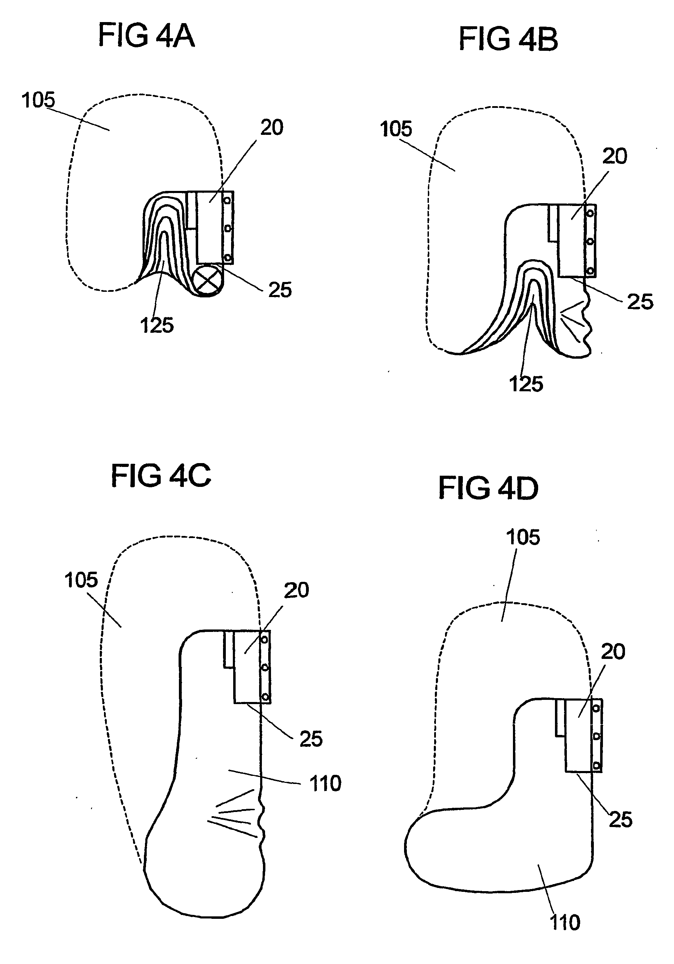

In den Figuren 3a bis 3d und 4a bis 4d ist ein zweites Ausführungsbeispiel für einen erfindungsgemäßen Gassack dargestellt, bei dem es sich beispielsweise um einen Head-Thorax-Airbag handelt. Der Gassack 100 weist zwei Gassackkammern 105 und 110 auf, die durch eine Trennstelle, beispielsweise eine Abtrennnaht 115 voneinander getrennt sind. Durch die Abtrennnaht 115 wird in der unteren Gassackkammer 110 ein Füllkanal 120 gebildet, in dem das Hüllenmaterial der unteren Gassackkammer 110 als U-förmiges Hüllenpaket 125 hineingeschoben ist.

Die untere Gassackkammer 105 bildet bei dem Gassack 100 die Pelvis-Kammer und die obere Gassackkammer 110 die Thorax-Kammer.

Bezüglich der Faltung der unteren Gassackkammer 110 und bezüglich des Entfaltungsvorgangs bei der unteren Gassackkammer 110 sei auf die Erläuterungen im Zusammenhang mit den Figuren 1a bis 1d und 2a bis 2d verwiesen, weil die untere Gassackkammer 110 im Wesentlichen in gleicher Weise gefaltet ist, wie der Gassack 5 gemäß den Figuren 1a bis 1d und 2a bis 2d, so dass er sich in vergleichbarer Weise entfaltet wie der Gassack 5.

Die obere Gassackkammer 105 kann direkt bzw. unmittelbar durch den Gasgenerator 20 aufgeblasen werden; dies setzt eine entsprechende Verbindung zwischen der oberen Gassackkammer 105 und dem Gasgenerator 20 voraus. Stattdessen kann die obere Gassackkammer 105 auch mittelbar über die untere Gassackkammer 110 aufgeblasen werden; dies setzt dann entsprechende Überstromöffnungen zwischen den beiden Gassackkammern 105 und 110 voraus.

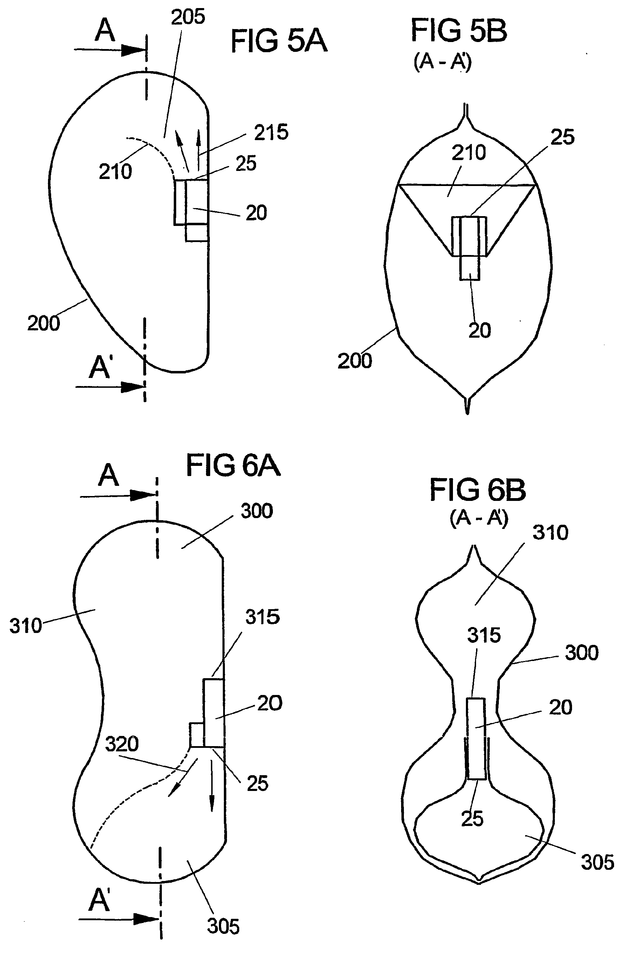

In den Figuren 5a und 5b ist ein drittes Ausführungsbeispiel für einen erfindungsgemäßen Gassack gezeigt. Bei diesem Gassack 200 kann es sich beispielsweise um einen Head-Thorax-Gassack handeln.

Bei dem Gassack 200 ist ein Füllkanal 205 durch eine Diffusorlage 210 gebildet. Anstelle der Diffusorlage 210 oder zusätzlich dazu können zur Bildung des Füllkanals 205 auch Fangbänder eingesetzt werden.

In den Figuren 5a und 5b deuten Pfeile 215 an, wie Gas aus dem Gasgenerator 20 an der Gasaustrittsöffnung 25 austritt und in den Füllkanal 205 eindringt.

Die Figur 5b zeigt den Gassack 200 gemäß der Figur 5a im Schnitt entlang der Schnittebene AA'.

Der an den Füllkanal angrenzende Teil der Gassackhülle bildet bei dem Gassack 200 den Head-Bereich des Airbags; der übrige Hüllenbereich den Thorax-Bereich.

In den Figuren 6a und 6b ist ein viertes Ausführungsbeispiel für einen erfindungsgemäßen Gassack gezeigt. Der Gassack 300, bei dem es sich um einen Pelvis-Thorax-Gassack handeln kann, weist zwei Gassackkammern 305 und 310 auf. Die untere Gassackkammer 305 bildet dabei die Pelvis-Kammer des Gassacks, die obere Gassackkammer 310 den Thorax-Bereich.

Der Gasgenerator 20 befüllt an seiner Gasaustrittsöffnung 25 die untere Gassackkammer 305 und an einer weiteren Gasaustrittsöffnung 315 die obere Gassackkammer 310.

Die untere Gassackkammer 305 wird im Bereich zur Gasaustrittsöffnung 25 schmaler und bildet somit einen Füllkanal 320, in den sowohl das Hüllenmaterial der unteren Kammer 305 als auch das untere Hüllenmaterial der oberen Kammer 310 beim Zusammenlegen des Gassacks hineingestülpt werden.

Die Figur 6b zeigt den Gassack 300 in einem Schnitt entlang der Schnittlinie AA'.

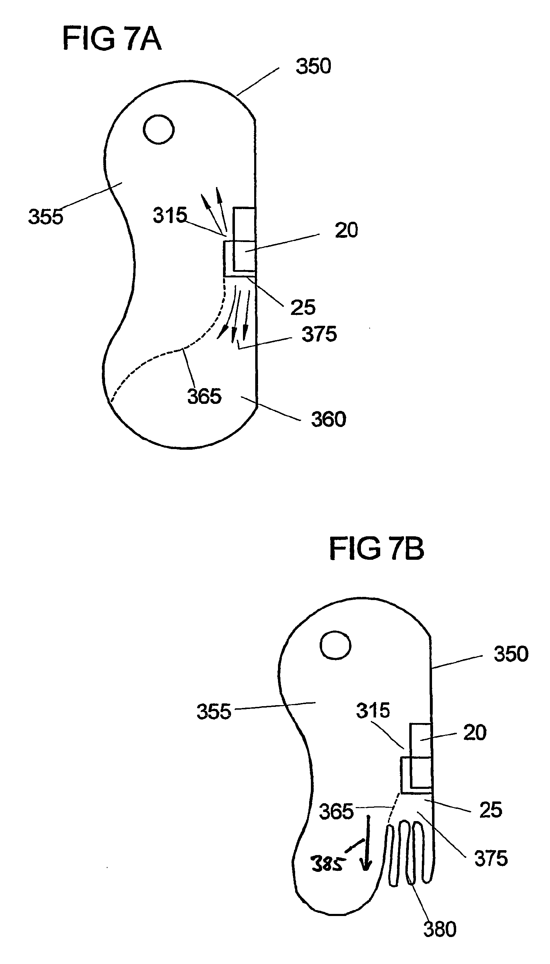

Die Figuren 7a und 7b zeigen ein fünftes Ausführungsbeispiel für einen erfindungsgemäßen Gassack. Die Figur 7a zeigt den Gassack 350 im aufgeblasenen Zustand und die Figur 7b den Gassack im teilweise zusammengefalteten Zustand.

Der Gassack 350 hat zwei Gassackkammern 355 und 360, die durch eine Naht 365 voneinander getrennt sind. Der Gasgenerator 20 mit seinen beiden Gasaustrittsöffnungen 25 und 315 bläst die beiden Gassackkammern 355 und 360 getrennt auf.

Durch die Naht 365 wird in der unteren Gassackkammer 360 ein Füllkanal 375 gebildet, in den das Hüllenmaterial der unteren Gassackkammer 360 als zick-zack-gefaltetes Hüllenpaket 380 eingeschoben bzw. eingestülpt ist. Dabei ist das Hüllenpaket 380 unmittelbar vor der Gasaustrittsöffnung 25 angeordnet, so dass der Gasstrom aus dem Gasgenerator 20 das Hüllenpaket 380 quasi entlang der Ausstülprichtung 385 aus dem Füllkanal 375 herausschießt bzw. herauskatapultiert.

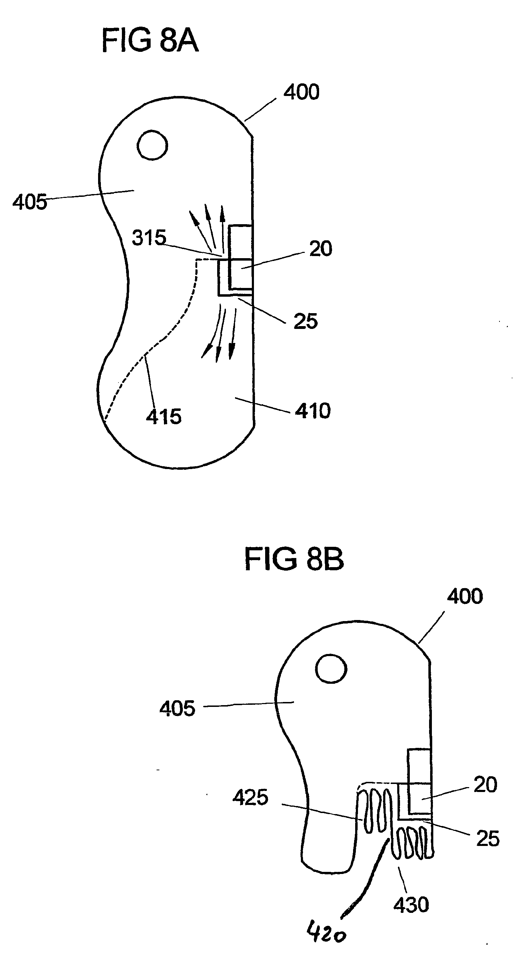

In den Figuren 8a und 8b ist ein sechstes Ausführungsbeispiel für einen erfindungsgemäßen Gassack dargestellt. Der Gassack 400 weist eine obere Gassackkammer 405 sowie eine untere Gassackkammer 410 auf. Die beiden Gassackkammern 405 und 410 sind beispielsweise durch eine Naht 415 oder eine andere Art von Trennstelle (z. B. Klebestelle) voneinander getrennt.

Die Hülle der unteren Gassackkammer 410 ist als zick-zack-gefaltetes Hüllenpaket 420 teils unmittelbar vor der Gasaustrittsöffnung 25 des Gasgenerators 20 und teils in einer Seitentasche 425 eines Füllkanals 430 angeordnet.

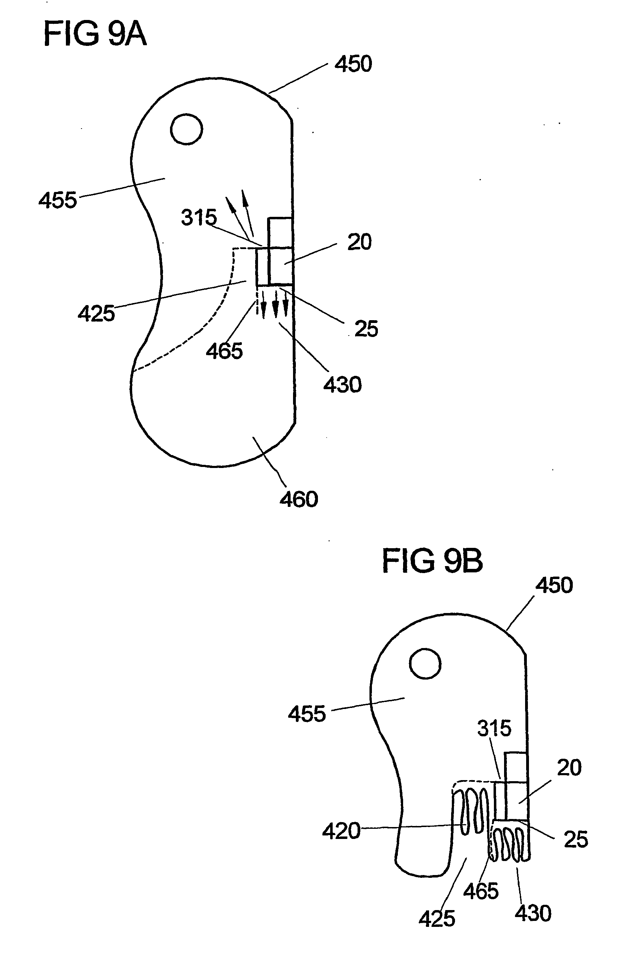

Die Figuren 9a und 9b zeigen ein siebentes Ausführungsbeispiel für einen erfindungsgemäßen Gassack. Der Gassack 450 weist wiederum eine obere Gassackkammer 455 und eine untere Gassackkammer 460 auf, die durch eine Abtrennung 465, beispielsweise eine Abtrennnaht, voneinander getrennt sind. Die Hülle der unteren Gassackkammer 460 wird beim Zusammenlegen zick-zack-gefaltet und als zick-zack-gefaltetes Hüllenpaket 420 teilweise in einer Seitentasche 425 und teilweise in einem Füllkanal 430 untergebracht.

Zusammengefasst unterscheidet sich das siebente Ausführungsbeispiel gemäß den Figuren 9a und 9b von dem sechsten Ausführungsbeispiel gemäß den Figuren 8a und 8b darin, dass der Bereich der Seitentasche 425 von dem übrigen Füllkanal 430 durch die Abtrennnaht 465 getrennt ist.

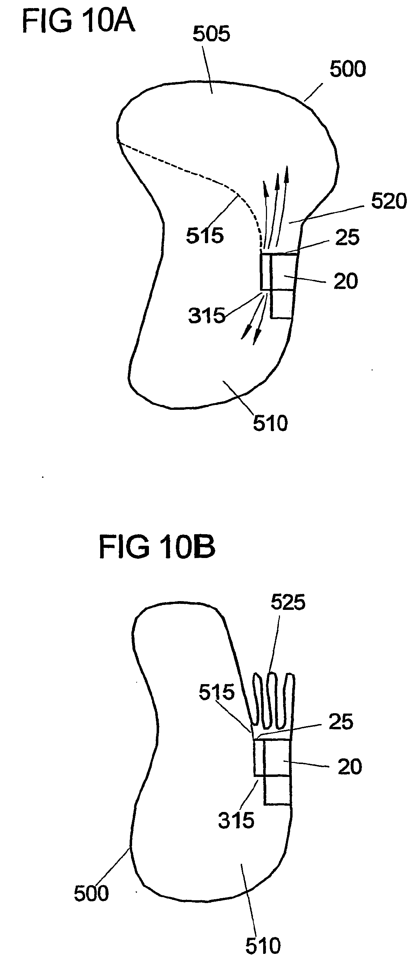

In den Figuren 10a und 10b ist ein achtes Ausführungsbeispiel für einen erfindungsgemäßen Gassack dargestellt. Bei dem Gassack 500 handelt es sich um einen sogenannten Head-Thorax-Gassack, der eine Kopfkammer 505 als obere Kammer 505 und eine untere Kammer 510 als Thorax-Kammer aufweist. Die beiden Kammern 505 und 510 sind durch eine Trennstelle 515, beispielsweise eine Naht, getrennt. In der oberen Kammer 505 ist durch die Naht 515 ein Füllkanal 520 gebildet.

Beim Zusammenfalten des Gassacks 500 gemäß den Figuren 10a und 10b wird die obere Kammer 505 zu einem Hüllenpaket 525 zusammengefaltet, das in den Füllkanal 520 eingeführt wird.

Wird der Gasgenerator 20 aktiviert, so tritt Gas aus der Gasaustrittsöffnung 25 aus und katapultiert das Hüllenpaktet 525 aus dem Füllkanal 520 heraus, so dass durch den Füllkanal 520 eine vorgegebene Ausstülprichtung erreicht wird.

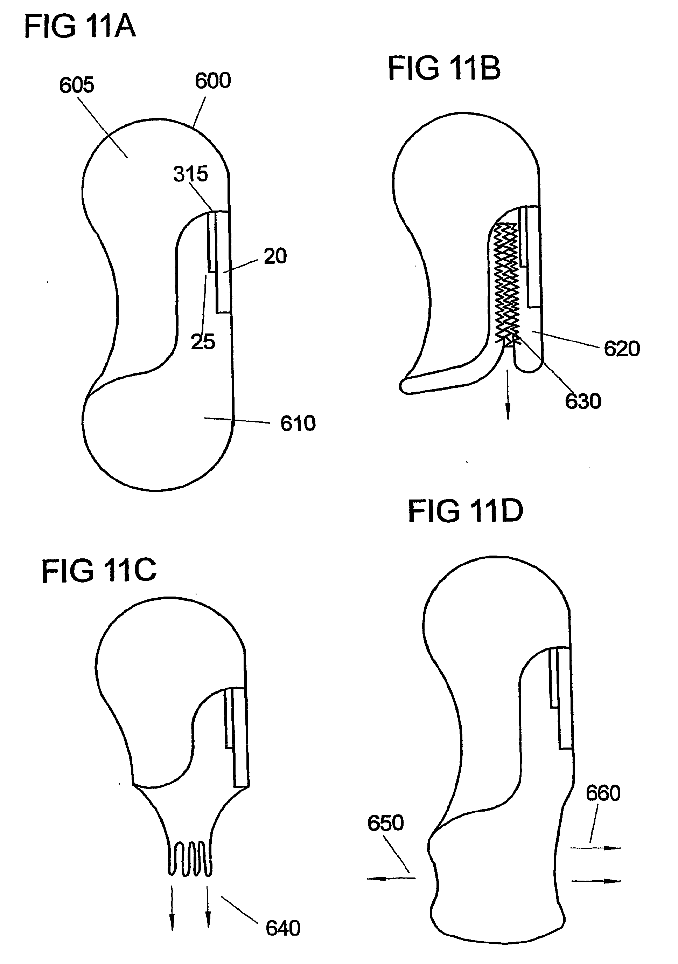

Die Figuren 11a bis 11d zeigen ein neuntes Ausführungsbeispiel für einen erfindungsgemäßen Gassack 600. Der Gassack umfasst eine obere Kammer 605 und eine untere Kammer 610. In den Füllkanal 620 ist das Hüllenpaket 630 "ungefaltet" hineingestopft. Die Pfeile 640, 650 und 660 zeigen das Entfalten des Gassacks 600 bei Aktivierung des Gasgenerators 20.

### Bezugszeichen

- 5: Gassack
- 10: Hüllenabschnitt
- 15: Füllkanal
- 20: Gasgenerator
- 25: Gasaustrittsöffnung
- 30: Gassackhülle
- 35: Hüllenende
- 40: Hüllenpaket
- 45: U-förmiges Hüllenpaket
- 50: Vorderer Bereich des Füllkanals
- 55: Verschlossenes Ende des Füllkanals
- 60: Überdruckbereich
- 65: Herausziehbereich der Gassackhülle aus dem Füllkanal
- 70: Ausstülprichtung
- 100: Gassack
- 105, 110: Gassackkammern
- 115: Abtrennnaht
- 120: Füllkanal
- 200: Gassack
- 205: Füllkanal
- 210: Diffusorlage
- 215: Pfeile
- 300: Gassack
- 305, 310: Gassackkammern
- 315: Gasaustrittsöffnung
- 320: Füllkanal
- 350: Gassack
- 355, 360: Gassackkammern
- 365: Naht
- 375: Füllkanal
- 380: Hüllenpaket
- 385: Ausstülprichtung
- 400: Gassack
- 405: Obere Gassackkammer
- 410: Untere Gassackkammer
- 415: Naht
- 420: Zick-zack-gefaltetes Hüllenpaket
- 425: Seitentasche
- 430: Füllkanal
- 450: Gassack
- 455: Obere Gassackkammer
- 460: Untere Gassackkammer
- 465: Abtrennnaht
- 500: Gassack
- 505: Obere Kammer
- 510: Untere Kammer
- 515: Trennstelle
- 520: Füllkanal
- 525: Hüllenpaket der oberen Kammer
- 600: Gassack
- 605: Untere Kammer
- 610: Obere Kammer
- 620: Füllkanal
- 630: Hüllenpaket
- 640: Pfeil
- 650: Pfeil
- 660: Pfeil

## Patentansprüche

1. Gassack (5) für eine einen Gasgenerator (20) aufweisende Insassenschutzeinrichtung, bei dem in einen Hüllenabschnitt der Gassackhülle zumindest ein Teil der übrigen Gassackhülle hineingestülpt ist,
**dadurch gekennzeichnet,**
**dass** der Hüllenabschnitt (10) einen sich entlang einer vorgegebenen Ausstülprichtung (70) erstreckenden, schmalen Füllkanal (15) bildet, der durch den Gasgenerator (20) mit Druckgas beaufschlagbar ist.

2. Gassack nach Anspruch 1, **dadurch gekennzeichnet, dass** der Füllkanal (15) unmittelbar an den Gasgenerator (20) anschließbar ist.

3. Gassack nach einem der vorangehenden Ansprüche, **dadurch gekennzeichnet, dass** in montiertem zustand der Gasgenerator (20) an einem Ende des Füllkanals angeschlossen ist und der hineingestülpte Teil der Gassackhülle unmittelbar vor der Anschlussstelle des Gasgenerators liegt.

4. Gassack nach einem der vorangehenden Ansprüche 1 bis 2, **dadurch gekennzeichnet, dass** in montiertem zustand der Füllkanal (15) eine Seitentasche (47) bildet, die seitlich neben der Anschlussstelle (25) des Gasgenerators liegt.

5. Gassack nach einem der vorangehenden Ansprüche, **dadurch gekennzeichnet, dass** der hineingestülpte Teil der Gassackhülle ungefaltet in den Füllkanal hineingestopft ist.

6. Gassack nach einem der vorangehenden Ansprüche 1 bis 4, **dadurch gekennzeichnet, dass** der hineingestülpte Teil der Gassackhülle zumindest teilweise zick-zack-gefaltet, gefächert und/oder zusammengerollt ist.

7. Gassack nach Anspruch 6, **dadurch gekennzeichnet, dass** der hineingestülpte Teil der Gassackhülle an seinem dem Füllkanal (15) abgewandten Hüllenende (35) zick-zack-gefaltet, gefächert und/oder zusammengerollt ist, das zick-zack-gefaltete, gefächerte und/oder zusammengerollte, Hüllenpaket (40) zumindest einmal unter Bildung eines im Querschnitt U-förmigen Hüllenpakts (45) zusammengeklappt ist und das U-förmige Hüllenpaket (45) in den Füllkanal (15) eingeschoben ist.

8. Gassack nach einem der vorangehenden Ansprüche, **dadurch gekennzeichnet, dass** der Gassack zwei oder mehr Gassackkammern aufweist.

9. Gassack nach Anspruch 8 , **dadurch gekennzeichnet, dass** der Gassack zumindest eine innere Gassackkammer aufweist, die von einer äußeren Gassackkammer umgeben wird.

10. Gassack nach einem der vorangehenden Ansprüche, **dadurch gekennzeichnet, dass** der Füllkanal zumindest teilweise seitlich durch eine Naht in der Gassackhülle gebildet ist.

11. Gassack nach einem der vorangehenden Ansprüche, **dadurch gekennzeichnet, dass** der Füllkanal (15) zumindest teilweise durch die Seitenwände der zugehörigen Gassackkammern gebildet ist.

12. Gassack nach einem der vorangehenden Ansprüche, **dadurch gekennzeichnet, dass** der Füllkanal zumindest teilweise durch eine im Gassack angebrachte Diffusorlage und/oder Fangbänder gebildet ist.

13. Gassack nach einem der vorangehenden Ansprüche, **dadurch gekennzeichnet, dass** der Füllkanal zumindest teilweise rohrförmig ausgebildet ist.

14. Gassack nach Anspruch 13, **dadurch gekennzeichnet, dass** sich der Querschnitt des Füllkanals an seinem offenen Kanalende trichterförmig erweitert.

15. Gassack nach einem der vorangehenden Ansprüche, **dadurch gekennzeichnet, dass** der Gassack ein Pelvis-Thorax-Gassack ist.

16. Gassack nach Anspruch 15, **dadurch gekennzeichnet, dass** der Pelvis-Bereich des Gassacks in den Füllkanal hineingestülpt ist.

17. Gassack nach einem der vorangehenden Ansprüche, **dadurch gekennzeichnet dass** der Gassack ein Head-Thorax-Gassack ist.

18. Gassack nach Anspruch 17, **dadurch gekennzeichnet, dass** der Head-Bereich des Gassacks in den Füllkanal eingestülpt ist.

19. Gassack nach einem der vorangehenden Ansprüche 1 bis 14. **dadurch gekennzeichnet, dass** der Gassack ein Head-Thorax-Pelvis Gassack ist.

20. Gassack nach Anspruch 19, **dadurch gekennzeichnet, dass** der Head-Bereich und/oder der Pelvis-Bereich des Gassacks in jeweils einen Füllkanal eingestülpt ist.

21. Verfahren zum Falten eines Gassacks, bei dem ein Teil der Gassackhülle in einen schmalen, durch einen Teil der Gassackhülle gebildeten Füllkanal eingeführt wird, der sich entlang einer vorgegebenen Ausstülprichtung erstreckt.

22. Verfahren nach Anspruch 21, **dadurch gekennzeichnet, dass** der hineingestülpte Teil der Gassackhülle ungefaltet in den Füllkanal gestopft wird.

23. Verfahren nach Anspruch 21, **dadurch gekennzeichnet, dass** der hineingestülpte Teil der Gassackhülle zumindest teilweise zick-zack-gefaltet, gefächert und/oder zusammengerollt wird.

24. Verfahren nach Anspruch 23, **dadurch gekennzeichnet, dass** der hineingestülpte Bereich an seinem dem Füllkanal abgewandten Hüllenende zunächst zick-zack-gefaltet, gefächert und/oder zusammengerollt wird, das zick-zack-gefaltete, gefächerte und/oder zusammengerollte Hüllenpaket (40) zumindest einmal unter Bildung eines im Querschnitt U-förmigen Hüllenpakets (45) zusammengeklappt wird und das U-förmige Hüllenpaket (45) in den Füllkanal (15) eingeschoben wird.

25. Kraftfahrzeugsitz mit einem Gassack nach einem der vorangehenden Ansprüche 15 oder 16, **dadurch gekennzeichnet, dass** der Gassack in einer Rückenlehne des Kraftfahrzeugsitzes derart untergebracht ist, dass die vorgegebene Ausstülprichtung sich parallel zur Rückenlehne des Kraftfahrzeugsitzes in Richtung Fahrzeugsitzfläche erstreckt.

26. Kraftfahrzeugsitz mit einem Gassack nach einem der vorangehenden Ansprüche 17 oder 18, **dadurch gekennzeichnet, dass** der Gassack in einer Rückenlehne des Kraftfahrzeugsitzes derart angebracht ist, dass die vorgegebene Ausstülprichtung sich parallel zur Rückenlehne des Kraftfahrzeugsitzes in Richtung Fahrzeugdach erstreckt.

27. Kraftfahrzeugsitz mit einem Gassack nach Anspruch 20, **dadurch gekennzeichnet, dass** der Gassack in einer Rückenlehne des Kraftfahrzeugsitzes derart angebracht ist, dass die vorgegebene Ausstülprichtung des Füllkanals für den Head-Bereich sich parallel zur Rückenlehne des Kraftfahrzeugsitzes in Richtung Fahrzeugdach und/oder die vorgegebene Ausstülprichtung des Füllkanals für den Pelvis-Bereich sich parallel zur Rückenlehne des Kraftfahrzeugsitzes in Richtung Fahrzeugsitzfläche erstreckt.

## Claims

1. Gas bag (5) for a car passenger-protecting system having a gas generator (20), in which at least part of the remaining gas bag envelope is turned back into an envelope section of the gas bag envelope,
**characterized in that**
the envelope section (10) forms a narrow filling channel (15) which extends along a predefined deployment direction (70) and to which compressed gas can be applied by the gas generator (20).

2. Gas bag according to Claim 1, **characterized in that** the filling channel (15) can be connected directly to the gas generator (20).

3. Gas bag according to one of the preceding claims, **characterized in that**, in the mounted state, the gas generator (20) is connected to one end of the filling channel and the part of the gas bag envelope that is turned back is located immediately in front of the connection point of the gas generator.

4. Gas bag according to one of the preceding Claims 1 to 2, **characterized in that**, in the mounted state, the filling channel (15) forms a side pocket (47) which is located laterally beside the connection point (25) of the gas generator.

5. Gas bag according to one of the preceding claims, **characterized in that** the part of the gas bag envelope that is turned back is stuffed into the filling channel unfolded.

6. Gas bag according to one of the preceding Claims 1 to 4, **characterized in that** the part of the gas bag envelope that is turned back is at least partly zigzag-folded, pleated and/or rolled together.

7. Gas bag according to Claim 6, **characterized in that** the part of the gas bag envelope that is turned back is zigzag-folded, pleated and/or rolled together at the end (35) of the envelope facing away from the filling channel (15), the zigzag-folded, pleated and/or rolled together envelope pack (40) is folded together at least once, forming an envelope pack (45) with a U-shaped cross section, and the U-shaped envelope pack (45) is pushed into the filling channel (15).

8. Gas bag according to one of the preceding claims, **characterized in that** the gas bag has two or more gas bag chambers.

9. Gas bag according to Claim 8, **characterized in that** the gas bag has at least one inner gas bag chamber, which is surrounded by an outer gas bag chamber.

10. Gas bag according to one of the preceding claims, **characterized in that** the filling channel is formed laterally, at least partly, by a seam in the gas bag envelope.

11. Gas bag according to one of the preceding claims, **characterized in that** the filling channel (15) is formed, at least partly, by the side walls of the associated gas bag chambers.

12. Gas bag according to one of the preceding claims, **characterized in that** the filling channel is formed, at least partly, by a diffuser layer fitted in the gas bag and/or by retaining straps.

13. Gas bag according to one of the preceding claims, **characterized in that** the filling channel is at least partly tubular.

14. Gas bag according to Claim 13, **characterized in that** the cross section of the filling channel widens like a funnel at its open channel end.

15. Gas bag according to one of the preceding claims, **characterized in that** the gas bag is a pelvis-thorax gas bag.

16. Gas bag according to Claim 15, **characterized in that** the pelvis region of the gas bag is turned back into the filling channel.

17. Gas bag according to one of the preceding claims, **characterized in that** the gas bag is a head-thorax gas bag.

18. Gas bag according to Claim 17, **characterized in that** the head region of the gas bag is turned back into the filling channel.

19. Gas bag according to one of the preceding Claims 1 to 14, **characterized in that** the gas bag is a head-thorax-pelvis gas bag.

20. Gas bag according to Claim 19, **characterized in that** the head region and/or the pelvis region of the gas bag is in each case turned back into a filling channel.

21. Method for folding a gas bag, in which a part of the gas bag envelope is inserted into a narrow filling channel, formed by part of the gas bag envelope, which extends along a predefined deployment direction.

22. Method according to Claim 21, **characterized in that** the part of the gas bag envelope that is turned back is stuffed into the filling channel unfolded.

23. Method according to Claim 21, **characterized in that** the part of the gas bag envelope that is turned back is at least partly zigzag-folded, pleated and/or rolled together.

24. Method according to Claim 23, **characterized in that** the region that is turned back is firstly zigzag-folded, pleated and/or rolled together at the end of the envelope facing away from the filling channel, the zigzag-folded, pleated and/or rolled together envelope pack (40) is folded together at least once, forming an envelope pack (45) with a U-shaped cross section, and the U-shaped envelope pack (45) is pushed into the filling channel (15).

25. Motor vehicle seat having a gas bag according to one of the preceding Claims 15 or 16, **characterized in that** the gas bag is accommodated in a backrest of the motor vehicle seat in such a way that the predefined deployment direction extends parallel to the backrest of the motor vehicle seat, in the direction of the vehicle seat area.

26. Motor vehicle seat having a gas bag according to one of the preceding Claims 17 or 18, **characterized in that** the gas bag is accommodated in a backrest of the motor vehicle seat in such a way that the predefined deployment direction extends parallel to the backrest of the motor vehicle seat, in the direction of the vehicle roof.

27. Motor vehicle seat having a gas bag according to Claim 20, **characterized in that** the gas bag is accommodated in a backrest of the motor vehicle seat in such a way that the predefined deployment direction of the filling channel for the head region extends parallel to the backrest of the motor vehicle seat, in the direction of the vehicle roof, and/or the predefined deployment direction of the filling channel for the pelvis region extends parallel to the backrest of the motor vehicle seat, in the direction of the vehicle seat area.

## Revendications

1. Airbag (5) pour un système de protection d'occupant comprenant un générateur à gaz (20), dans lequel au moins une partie de l'enveloppe de sac restante est emboutie dans une partie de l'enveloppe de l'airbag,
**caractérisé en ce que**
la partie de l'enveloppe (10) forme un canal de remplissage (15) fin, s'étendant dans une direction d'emboutissage (70) prédéterminée, lequel peut être alimenté par l'intermédiaire du générateur à gaz (20) à l'aide de gaz sous pression.

2. Airbag selon la revendication 1, **caractérisé en ce que** le canal de remplissage (15) peut être directement relié au générateur à gaz (20).

3. Airbag selon l'une quelconque des revendications précédentes, **caractérisé en ce que**, dans l'état monté, le générateur à gaz (20) est relié à une extrémité du canal de remplissage, et la partie emboutie de l'enveloppe de l'airbag se situe directement devant l'emplacement de connexion du générateur à gaz.

4. Airbag selon l'une quelconque des revendications 1 à 2, **caractérisé en ce que**, dans l'état monté, le canal de remplissage (15) forme une poche latérale (47), laquelle se situe latéralement à côté de l'emplacement de connexion (25) du générateur à gaz.

5. Airbag selon l'une quelconque des revendications précédentes, **caractérisé en ce que** la partie emboutie de l'enveloppe de l'airbag est remplie de manière non pliée dans le canal de remplissage.

6. Airbag selon l'une quelconque des revendications 1 à 4, **caractérisé en ce que** la partie emboutie de l'enveloppe de l'airbag est pliée au moins partiellement en zigzag, en éventail et/ou enroulée.

7. Airbag selon la revendication 6, **caractérisé en ce que** la partie emboutie de l'enveloppe à gaz est pliée au moins partiellement en zigzag, en éventail et/ou enroulée au niveau de son extrémité d'enveloppe (35) éloignée du canal de remplissage (15), le paquet d'enveloppe (40) plié en zigzag, en éventail et/ou enroulée étant plié au moins une fois en formant un paquet d'enveloppe (45) en forme de U dans sa coupe transversale, et le paquet d'enveloppe (45) en forme de U est introduit dans le canal de remplissage (15).

8. Airbag selon l'une quelconque des revendications précédentes, **caractérisé en ce que** l'airbag comprend deux ou plusieurs chambres d'airbag.

9. Airbag selon la revendication 8, **caractérisé en ce que** l'airbag comprend au moins une chambre d'airbag intérieure, laquelle est entourée d'une chambre d'airbag extérieure.

10. Airbag selon l'une quelconque des revendications précédentes, **caractérisé en ce que** le canal de remplissage est formé au moins partiellement latéralement par l'intermédiaire d'une couture dans l'enveloppe de l'airbag.

11. Airbag selon l'une quelconque des revendications précédentes, **caractérisé en ce que** le canal de remplissage (15) est formé au moins partiellement par l'intermédiaire des parois latérales des chambres de l'airbag correspondantes.

12. Airbag selon l'une quelconque des revendications précédentes, **caractérisé en ce que** le canal de remplissage est formé au moins partiellement par l'intermédiaire d'un emplacement de diffusion et/ou de bandes de garde installé/installées dans l'airbag.

13. Airbag selon l'une quelconque des revendications précédentes, **caractérisé en ce que** le canal de remplissage est au moins partiellement tubulaire.

14. Airbag selon la revendication 13, **caractérisé en ce que** la coupe transversale du canal de remplissage est agrandie à la façon d'un entonnoir au niveau de son extrémité de canal ouverte.

15. Airbag selon l'une quelconque des revendications précédentes, **caractérisé en ce que** l'airbag est un airbag Pelvis-Thorax.

16. Airbag selon la revendication 15, **caractérisé en ce que** la zone Pelvis de l'airbag est emboutie dans le canal de remplissage.

17. Airbag selon l'une quelconque des revendications précédentes, **caractérisé en ce que** l'airbag est un airbag Head-Thorax.

18. Airbag selon la revendication 17, **caractérisé en ce que** la zone Head de l'airbag est emboutie dans le canal de remplissage.

19. Airbag selon l'une quelconque des revendications 1 à 14, **caractérisé en ce que** l'airbag est un airbag Head-Thorax-Pelvis.

20. Airbag selon la revendication 19, **caractérisé en ce que** la zone Head et/ou la zone Pelvis de l'airbag est emboutie respectivement dans un canal de remplissage.

21. Procédé pour le pliage d'un airbag, dans lequel une partie de l'enveloppe de l'airbag est introduite dans un canal de remplissage fin et formé à l'aide d'une partie de l'enveloppe de l'airbag, lequel s'étend dans une direction d'emboutissage prédéterminée.

22. Procédé selon la revendication 21, **caractérisé en ce que** la partie emboutie de l'enveloppe de l'airbag est introduite dans le canal de remplissage de manière non pliée.

23. Procédé selon la revendication 21, **caractérisé en ce que** la partie emboutie de l'enveloppe de l'airbag est pliée au moins partiellement en zigzag, en éventail et/ou enroulée.

24. Procédé selon la revendication 23, **caractérisé en ce que** la zone emboutie au niveau de son extrémité éloignée du canal de remplissage est d'abord pliée en zigzag, en éventail et/ou enroulée, le paquet d'enveloppe (40) plié en zigzag, en éventail et/ou enroulé est plié au moins une fois en formant un paquet d'enveloppe (45) en forme de U dans sa coupe transversale, et le paquet d'enveloppe (45) en forme de U est introduit dans le canal de remplissage (15).

25. Siège d'occupant de véhicule automobile comprenant un airbag selon l'une quelconque des revendications 15 ou 16, **caractérisé en ce que** l'airbag est installé dans un dossier du siège d'occupant du véhicule automobile, de telle sorte que la direction d'emboutissage prédéterminée s'étende parallèlement par rapport au dossier du siège de véhicule automobile dans la direction de la surface d'assise du véhicule.

26. Siège d'occupant de véhicule automobile comprenant un airbag selon l'une quelconque des revendications 17 ou 18, **caractérisé en ce que** l'airbag est installé dans un dossier du siège d'occupant de véhicule automobile, de telle sorte que la direction d'emboutissage prédéterminée s'étende parallèlement par rapport au dossier du siège de véhicule automobile dans la direction du toit du véhicule automobile.

27. Siège d'occupant de véhicule automobile comprenant un airbag selon la revendication 20, **caractérisé en ce que** l'airbag est installé dans un dossier du siège d'occupant de véhicule automobile, de telle sorte que la direction d'emboutissage prédéterminée du canal de remplissage pour la zone Head s'étend parallèlement par rapport au dossier du siège de véhicule automobile en direction du toit de véhicule et/ou la direction d'emboutissage prédéterminée du canal de remplissage pour la zone Pelvis s'étend parallèlement au dossier du siège de véhicule automobile en direction de la surface d'assise du véhicule.
